# EUROPÄISCHE PATENTSCHRIFT

(11) **EP 1 176 419 B1**
(45) Veröffentlichungstag und Bekanntmachung des Hinweises auf die Patenterteilung: **14.11.2007**
(21) Anmeldenummer: 01116271.6
(22) Anmeldetag: 05.07.2001
(51) Int. Cl.: G01N 27/403, G01N 27/416, G01N 27/30

(54) **Messsonde für potentiometrische Messungen, Verfahren zur Überwachung des Alterungszustandes der Messsonde und ihre Verwendung**
Measuring probe for potentiometric measurements, method for checking the ageing condition of the probe and the use of it
Sonde de mesure pour des mesures potentiométriques, méthode pour surveiller l'état de vieillissement de la sonde et son utilisation

(30) Priorität: 25.07.2000 DE 10036039
(43) Veröffentlichungstag der Anmeldung: 30.01.2002
(73) Patentinhaber: Mettler-Toledo AG, 8606 Greifensee (CH)
(72) Erfinder: Meier, Peter, C., 5610 Wohlen (CH)

(56) Entgegenhaltungen:
- WO-A-96/35944
- DE-A- 3 405 431
- DE-A- 19 626 277
- US-A- 4 686 011

## Beschreibung

### Technisches Gebiet

Die Erfindung betrifft eine Messsonde für potentiometrische Messungen gemäss dem Oberbegriff des Anspruches 1, ein Verfahren zur Überwachung des Alterungszustandes der Messsonde sowie eine Verwendung der Messsonde zur Prozessüberwachung und/oder Prozesssteuerung.

### Stand der Technik

Eine weit verbreitete Art von Messsonden für potentiometrische Messungen von lonenkonzentrationen oder von Redoxpotentialen ist mit einem Diaphragma aus einem porösen Material ausgestattet, über das ein in der Messsonde enthaltener, allgemein in flüssiger Form vorliegender Bezugs- und/oder Brückenelektrolyt mit einer Messlösung in Kontakt bringbar ist. Insbesondere beim Einsatz für die Prozessüberwachung und/oder Prozesssteuerung bei chemischen oder mikrobiologischen Verfahren können Verschmutzungen des Diaphragmas auftreten, die zu einer Verfälschung des Messergebnisses führen.

Aus der DE 3405431 C2 ist eine gattungsgemässe Messsonde ohne Diaphragma bekannt, welche für Verschmutzungen wesentlich weniger anfällig ist. Die dort beschriebene Messsonde hat ein Gehäuse aus elektrisch isolierendem Material, wobei das Gehäuse mindestens einen Hohlraum zur Aufnahme eines Bezugselementes und einen Elektrolyten sowie mindestens eine Öffnung aufweist, durch die der Elektrolyt mit einer ausserhalb des Gehäuses befindlichen Messlösung in Kontakt bringbar ist. Der Hohlraum ist mit einem ionendurchlässigen hochviskosen mikroporösen Polymer ausgefüllt, wobei das Polymer und der Elektrolyt zusammen eine Füllmasse bilden. Durch diese Bauweise ist eine hohe Konstanz des am Bezugselement messbaren Potentials auch bei stark verschmutzten Messlösungen gewährleistet, und überdies ist die Messsonde mit Drücken von wesentlich mehr als 10 bar belastbar.

Ein bekanntes Problem bei Messsonden dieser Gattung besteht darin, dass mit fortschreitender Betriebsdauer der anfänglich im Polymer befindliche Elektrolyt zunehmend in die Messlösung übertritt, wodurch sich im Polymer eine im Inneren des Gehäuses fortschreitende Verarmung an Elektrolyten ergibt, die auch als Alterungsprozess der Messsonde bezeichnet wird. Wenn die Verarmung an Elektrolyten schliesslich das Bezugselement erreicht, stellt sich eine unerwünschte Veränderung des am Bezugselement abgreifbaren Potentials ein. Zur Vermeidung verfälschter Messergebnisse ist es deshalb erforderlich, den Alterungsprozess der Messsonde zu überwachen. Insbesondere sollte eine bevorstehende Ankunft der Verarmung am Bezugselement rechtzeitig, das heisst mit einer angemessenen Vorwarnungszeit, erkennbar sein.

Zur Lösung dieses Problems ist in der DE 3405431 C2 vorgesehen, dass der Elektrolyt eine Suspension von homogen verteilten Partikeln eines Neutralsalzes mit lonen gleicher Überführungszahl in einer wässrigen Lösung des Neutralsalzes ist, wobei das Polymer und die Neutralsalzsuspension zusammen ein Gel bilden, das eine Trübung durch die Neutralsalzpartikel aufweist. Durch diese Ausbildung lässt sich der Alterungszustand der bekannten Messsonde visuell feststellen, da die Trübung des Polymers mit fortschreitender Alterung abnimmt. Der Grund für diese Abnahme liegt darin, dass die feinverteilten Neutralsalzpartikel laufend in Lösung gehen, bis im Endzustand eine Lösung vorliegt, die im wesentlich keine suspendierten Neutralsalzpartikel enthält und dementsprechend eine stark verminderte Trübung aufweist. Dabei wurde festgestellt, dass zwischen einem in ursprünglichem Zustand vorliegenden Bereich des Gels, in dem die Neutralsalzpartikel homogen suspendiert sind, und einem zweiten Bereich, in dem die Neutralsalzpartikel in Lösung gegangen sind, sich eine deutlich sichtbare Verarmungsfront ausbildet, deren Fortschreiten auf einem von der Öffnung des Gehäuses bis hin zum Bezugselement führenden Verarmungsweg visuell verfolgt werden kann. Aus der Lage der Verarmungsfront und ihrer Wanderungsgeschwindigkeit kann auf den Alterungszustand beziehungsweise auf die Geschwindigkeit der Alterung geschlossen werden.

Ein Nachteil der aus der DE 3405431 C2 bekannten Messsonde besteht jedoch darin, dass zur Überwachung des Alterungszustandes ein einwandfreier visueller Zugang zum Hohlraum der Messsonde erforderlich ist. Dies schliesst einerseits die Verwendung eines nicht durchsichtigen Gehäuses aus und ergibt andererseits Probleme bei einer Verschmutzung eines an sich durchsichtigen Gehäuses. Ein weiteres und gravierendes Problem stellt die Verfärbung oder Verschmutzung des im Hohlraum befindlichen Gels, beispielsweise durch aus der Messlösung eindiffundierenden Farbstoff oder durch aus der Lösung eingeschleppte Schmutzpartikel dar, welche die visuelle Erkennung der Verarmungsfront praktisch verunmöglichen können. Nachteilig ist überdies, dass zwecks Sichtbarmachung der Verarmungsfront ein als Suspension von homogen verteilten Partikeln eines Neutralsalzes mit lonen gleicher Überführungszahl in einer wässrigen Lösung des Neutralsalzes vorliegender Elektrolyt vorzusehen ist, was insbesondere die Verwendung anders ausgebildeter Elektrolyten ausschliesst.

Die US 4 686 011 beschreibt ein Verfahren zur Überwachung einer Bezugselektrode sowie eine entsprechende Bezugselektrode. Eine zusätzliche Überwachungselektrode, die als pH- bzw. pX-Elektrode ausgestaltet ist, befindet sich mit ihrer Glasmembran in Kontakt mit einem Brückenelektrolyten, der jeweils über Diaphragmen getrennt zwischen dem Bezugselektrolyten und dem Messmedium angeordnet ist. Der Brückenelektrolyt ist auf einen konstanten pH bzw. pX-Wert festgelegt. Damit kann eine Verschmutzung des Brückenelektrolyten detektiert werden, bevor diese in den Bezugselektrolyten eindringt.

### Darstellung der Erfindung

Aufgabe der Erfindung ist es, eine verbesserte Messsonde bereitzustellen, bei welcher die obigen Nachteile vermieden werden, sowie ein Verfahren zur Überwachung des Alterungszustandes und eine Verwendung der Messsonde anzugeben.

Gelöst wird diese Aufgabe durch die im Anspruch 1 definierte Messsonde sowie durch das im Anspruch 18 definierte Verfahren beziehungsweise die im Anspruch 19 definierte Verwendung.

Dadurch, dass bei der erfindungsgemässen Messsonde der Hohlraum ein sekundäres Bezugselement enthält, welches derart angeordnet ist, dass eine von der Öffnung bis zum primären Bezugselement fortschreitende Verarmung an Elektrolyten das sekundäre Bezugselement vor dem primären Bezugselement erreicht, ist der Alterungszustand der Messsonde unabhängig von der visuellen Zugänglichkeit des Hohlraums überwachbar. Dabei weist das sekundäre Bezugselement eine Sekundärelektrode auf, die als Ag/AgCl-Elektrode ausgestaltet ist, welche direkt in den Elektrolyten oder in einen Sekundärelektrolyten eingetaucht ist. Insbesondere lässt sich die erfindungsgemässe Messsonde auch mit einem nicht durchsichtigen Gehäuse ausstatten oder in eine Armatur einbauen. Darüber hinaus ist die Überwachbarkeit auch bei verschmutztem Gehäuse gewährleistet, was beispielsweise beim Einsatz im Zusammenhang mit verschmutzten oder schaumhaltigen Messlösungen vorteilhaft ist. Da es zudem nicht erforderlich ist, zwecks Sichtbarmachung der Verarmungsfront einen als Suspension von homogen verteilten Partikeln eines Neutralsalzes mit lonen gleicher Überführungszahl in einer wässrigen Lösung des Neutralsalzes vorliegenden Elektrolyt vorzusehen, ergibt sich als weiterer Vorteil ein grösserer Spielraum bezüglich des zusammen mit dem Polymer verwendeten Elektrolyten, der insbesondere auch als gesättigte oder annähernd gesättigte Lösung eines Neutralsalzes in einem geeigneten Lösungsmittel, beispielsweise eine annähernd gesättigte Lösung von Kaliumchlorid in Wasser vorliegen kann.

Dadurch, dass man beim erfindungsgemässen Verfahren kontinuierlich oder in zeitlichen Abständen eine zwischen primärem Bezugselement und sekundärem Bezugselement gemessene Potentialdifferenz auf Überschreitung eines vorgegebenen Schwellenwertes und/oder auf Überschreitung einer vorgegebenen Veränderungsrate überwacht, kann man den Alterungszustandes der Messsonde zuverlässig überwachen, wobei insbesondere auch eine automatisierte Überwachung möglich ist. Dementsprechend kann die erfindungsgemässe Messsonde mit Vorteil zur Prozessüberwachung und/oder Prozesssteuerung verwendet werden.

Vorteilhafte Ausgestaltungen der Messsonde sind in den abhängigen Ansprüchen beschrieben.

Bei der Ausgestaltung nach Anspruch 2 ist das primäre Bezugselement als primäre Patrone ausgebildet, die eine primäre Elektrode und einen Primärelektrolyten enthält. Der erforderliche elektrische Kontakt zwischen dem Primärelektrolyten und dem im Hohlraum vorliegenden Elektrolyten kann in bekannter Weise über eine Diffusionsstrecke, beispielsweise aus Glaswolle oder Watte, hergestellt werden. Alternativ kann die primäre Patrone gemäss Anspruch 3 offen ausgebildet sein. Die Wahl des Primärelektrolyten richtet sich unter anderem nach der Bauweise der Primärelektrode, aber auch nach der Zusammensetzung und Beschaffenheit des im Hohlraum vorliegenden Elektrolyten. Insbesondere kann gemäss Anspruch 4 der Primärelektrolyt im Gemisch mit dem gleichen Polymer wie es Bestandteil der Füllmasse ist, vorliegen.

Die Ansprüche 5 bis 8 definieren vorteilhafte Ausgestaltungen des sekundären Bezugselementes, welches analog oder gar identisch wie das primäre Bezugselement ausgebildet sein kann. Weitere bevorzugte Ausgestaltungen des sekundären Bezugselementes ergeben sich aus den Ansprüchen 9 und 10, welche es insbesondere ermöglichen, bei vorgegebenen Abmessungen des Gehäuses einen möglichst langen Verarmungsweg zwischen der Öffnung und dem primären Bezugselement anzulegen, was sich in einer entsprechend langen Zeitdauer des Alterungsprozesses der Messsonde niederschlägt.

Die Primärelektrode und/oder die Sekundärelektrode können in an sich bekannter Art als Drahtelektroden ausgebildet sein, beispielsweise als Silberdraht, dessen eines Ende mit Silberchlorid beschichtet ist und in den Primär- beziehungsweise Sekundärelektrolyt eingetaucht ist. Alternativ kann gemäss Anspruch 11 mindestens eines der Bezugselemente, namentlich die Primärelektrode des primären Bezugselements und/oder die Sekundärelektrode des sekundären Bezugselements, eine als Leiterbahn ausgebildete Elektrode aufweisen, welche beispielsweise auf der inneren oder äusseren Wandfläche eines patronenförmigen Bezugselementes oder auf der inneren Wandfläche des Gehäuses aufgebracht sein kann.

Besonders bevorzugte Ausgestaltungen des Elektrolyten sind in den Ansprüchen 12 bis 14 definiert. Dadurch dass gemäss Anspruch 12 der Elektrolyt eine Suspension von homogen verteilten Partikeln eines Neutralsalzes mit lonen gleicher Überführungszahl in einer Lösung des Neutralsalzes ist, liegt in der gesamten Füllmasse ein erheblicher Vorrat des Elektrolyten vor, was zum Vorteil einer langen Standzeit der Messsonde führt. Als Neutralsalz hat sich insbesondere Kaliumchlorid bewährt, wobei dieses gemäss Anspruch 14 als Suspension von feinteiligen Kaliumchloridpartikeln in einer wässrigen oder teilwässrigen Kaliumchloridlösung ist und wobei die Menge des suspendierten Kaliumchlorids mindestens 30, beispielsweise 30 bis 1500, vorzugsweise 100 bis 800, insbesondere 200 bis 400, Prozent, bezogen auf das Trockengewicht des Polymers beträgt.

Gemäss Anspruch 15 ist die Messsonde als Bezugselektrode ausgebildet, wodurch sie als Referenzelement beispielsweise für eine pH-Elektrode oder eine andere Messelektrode geeignet ist. Demgegenüber ist die Messsonde gemäss Anspruch 16 als Einstabmesskette ausgebildet und weist damit den Vorteil einer besonders kompakten Bauweise und einer einfachen Bedienbarkeit auf.

Eine bevorzugte Messsonde ist in Anspruch 17 definiert. Dadurch, dass Mittel zur Überwachung einer Potentialdifferenz zwischen primärem Bezugselement und sekundärem Bezugselement vorgesehen sind, ist die Messsonde für die Verwendung bei automatisierten Prozessen, beispielsweise zur Prozessüberwachung und/oder Prozesssteuerung besonders geeignet.

### Kurze Beschreibung der Zeichnungen

Ausführungsbeispiele der Erfindung werden nachfolgend anhand der Zeichnungen näher beschrieben, dabei zeigen:
- Figur 1: eine als Bezugselektrode ausgebildete Messsonde, im Längsschnitt;
- Figur 2: eine Messsonde mit verlängertem Verarmungsweg, in verkürzter Darstellung, im Längsschnitt;
- Figur 3: den oberen Teil einer weiteren Messsonde mit verlängertem Verarmungsweg, im Längsschnitt.

### Wege zur Ausführung der Erfindung

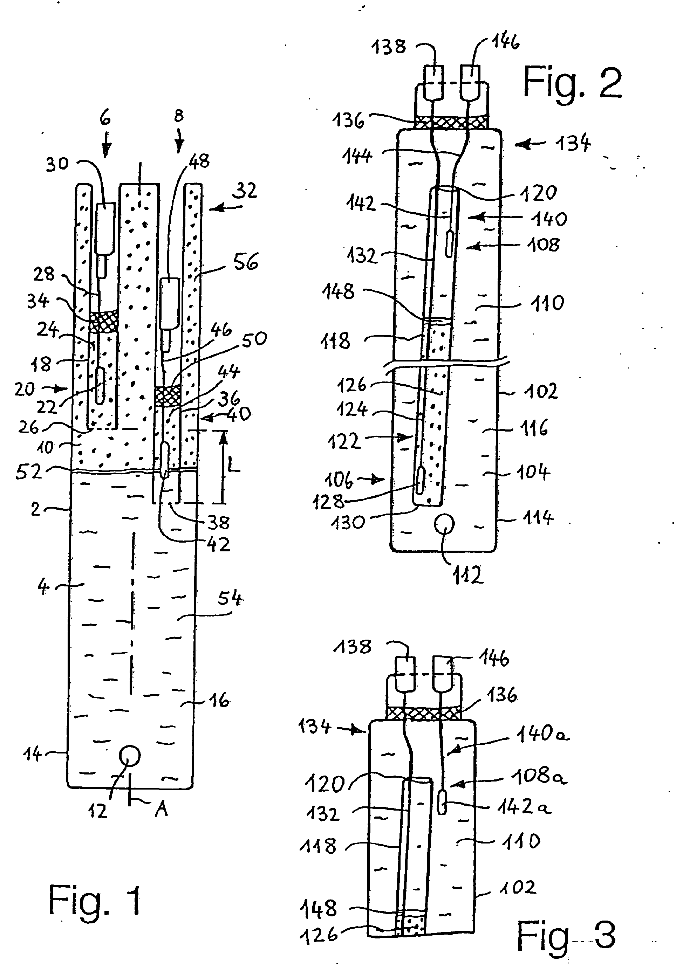

Die Figur 1 zeigt eine als Bezugselektrode ausgebildete Messsonde mit einem üblicherweise als Elektrodenschaft bezeichneten rohrartigen Gehäuse 2 aus elektrisch isolierendem Material, beispielsweise aus Glas oder aus einem Kunststoff wie einem Polyaryletherketon (PAEK), insbesondere Polyetheretherketon (PEEK). Das Gehäuse 2 weist einen Hohlraum 4 auf, welcher ein primäres Bezugselement 6, ein sekundäres Bezugselement 8 sowie einen Elektrolyten 10 enthält. Eine Öffnung 12 des Gehäuses 2 ist dazu vorgesehen, beim Eintauchen der Messonde in eine in der Figur nicht dargestellte Messlösung den Elektrolyten 10 mit der Messlösung in Kontakt zu bringen. Im gezeigten Beispiel ist die Öffnung 12 durch eine durchgehende Bohrung in einem endständigen Bereich 14 des Gehäuses 2 gebildet. Der Hohlraum 4 ist mit einem ionendurchlässigen hochviskosen mikroporösen Polymer ausgefüllt, welches zusammen mit dem Elektrolyten 10 eine Füllmasse 16 bildet. Um ein Ausfliessen der Füllmasse 16 durch die Öffnung 12 zu verhindern, sollte die Füllmasse bei den vorgesehenen Betriebstemperaturen der Messsonde zähflüssig oder sogar fest sein. Diesbezüglich hat sich als die Füllmasse bildendes Polymer ein Copolymer von Acrylamid und N,N¹-Methylen-bis-acrylamid bewährt.

Das primäre Bezugselement 6 ist als einseitig offene Patrone 18 ausgebildet, welche eine Primärelektrode 20 mit bekanntem Potential enthält. Beispielsweise ist die Primärelektrode als Ag/AgCl-Elektrode ausgestaltet, die einen chlorierten Silberdraht 22 aufweist, der in einen Primärelektrolyten 24 eingetaucht ist. Um ein Ausfliessen des Primärelektrolyten 24 am offenen Ende 26 der Patrone 18 zu verhindern, ist dieser in die Poren eines ionendurchlässigen mikroporösen Polymers, vorzugsweise desselben wie es Bestandteil der Füllmasse 16 ist, eingeschlossen. In dem dem offenen Ende 26 gegenüberliegenden Teil des primären Bezugselementes 6 ist ein über eine drahtförmige Zuleitung 28, beispielsweise einen Platindraht, mit der Primärelektrode 20 verbundener Steckkontakt 30 vorgesehen, über den eine Verbindung mit im Kopfteil 32 oder ausserhalb des Gehäuses 2 angeordneten Anschlusselementen hergestellt werden kann. Ausserdem ist innerhalb des primären Bezugselementes 6 eine Dichtung 34, beispielsweise eine Glas- oder Kunststoffdichtung vorgesehen, durch die eine Berührung des Steckkontaktes 30 mit dem Primärelektrolyten 24 verhindert wird. Anstelle der endständigen Öffnung 26 kann gewünschtenfalls eine laterale Öffnung vorgesehen sein.

Im Beispiel der Figur 1 ist das sekundäre Bezugselement 8 im wesentlichen identisch ausgebildet wie das primäre Bezugselement 6 und beinhaltet dementsprechend eine Patrone 36 mit einem offenen Ende 38, welche eine als Ag/AgCl-Elektrode ausgestaltete Sekundärelektrode 40 mit einem chlorierten Silberdraht 42 aufweist, der in einen Sekundärelektrolyten 44 eingetaucht ist. Der Sekundärelektrolyt 44 ist in die Poren eines ionendurchlässigen mikroporösen Polymers, vorzugsweise desselben wie es Bestandteil der Füllmasse 16 ist, eingeschlossen. Ausserdem weist das sekundäre Bezugselement 8 einen über eine drahtförmige Zuleitung 46, beispielsweise einen Platindraht, mit der Sekundärelektrode 40 verbundenen Steckkontakt 48 auf, über den eine Verbindung mit im Kopfteil 32 oder ausserhalb des Gehäuses 2 angeordneten Anschlusselementen hergestellt werden kann. Innerhalb des sekundären Bezugselementes 8 ist überdies eine Dichtung 50, beispielsweise eine Glas- oder Kunststoffdichtung vorgesehen, durch die eine Berührung des Steckkontaktes 48 mit dem Sekundärelektrolyten 44 verhindert wird.

Wie aus der Figur 1 hervorgeht, sind primäres Bezugselement 6 und sekundäres Bezugselement 8 längsverschoben zueinander angeordnet, wobei das offene Ende 26 der primären Bezugselementes 6 weiter entfernt von der Öffnung 12 ist als das offene Ende 38 des sekundären Bezugselementes 8. Wie nachfolgend noch näher erläutert wird, bewirkt die beschriebene Anordnung, dass eine von der Öffnung 12 bis zum primären Bezugselement 6 fortschreitende Verarmung an Elektrolyten 10 das sekundäre Bezugselement 8 vor dem primären Bezugselement 6 erreicht.

Der Elektrolyt 10 und vorzugsweise auch der Primärelektrolyt 24 und der Sekundärelektrolyt 44 beinhaltet vorzugsweise eine Suspension von feinteiligen KaliumchloridPartikeln in einer wässrigen Kaliumchloridlösung, wobei die Menge des suspendierten Kaliumchlorids mindestens 30, beispielsweise 30 bis 1500, vorzugsweise 100 bis 800, insbesondere 200 bis 400, Prozent, bezogen auf das Trockengewicht des Polymers beträgt. Anstelle einer wässrigen kann auch eine teilwässrige Kaliumchloridlösung verwendet werden, beispielsweise eine Lösung von Kaliumchlorid in einem Gemisch von Wasser und Glycerin oder Äthylenglykol, wodurch eine Verringerung des Wasserdampfpartialdruckes erreicht wird, was insbesondere für den Einsatz bei einer erhöhten Betriebstemperatur erwünscht ist. Alternativ können der Elektrolyt 10 und/oder der Primärelektrolyt 24 und/oder der Sekundärelektrolyt 44 zusammen mit dem Polymer einen Festkörperelektrolyten bilden.

Mit zunehmender Alterung bzw. fortschreitender Betriebsdauer der Messsonde tritt der anfänglich in der Füllmasse 16 befindliche Elektrolyt 10, d.h. die Kalium- und Chloridionen, zunehmend in die Messlösung über, wodurch sich im Hohlraum 4 eine von der Öffnung 12 her ins Innere der Messsonde fortschreitende Verarmungsfront 52 ausbildet. Die Verarmungsfront stellt dabei eine Grenze zwischen einem verarmten Teil 54 der Füllmasse 16, in welchem die Kaliumchloridpartikel aufgelöst wurden, und einem nicht verarmten Teil 56 dar, in welchem noch Kaliumchloridpartikel vorhanden sind.

Anstelle der Suspension von Kaliumchloridpartikeln kann als Elektrolyt auch eine annähernd gesättigte Lösung, beispielsweise eine ungefähr 3-molare wässrige Lösung von Kaliumchlorid verwendet werden. Dies führt allerdings zum Nachteil einer verkürzten Standzeit, da der in der Füllmasse 16 anfänglich verteilte Vorrat an Kaliumchlorid geringer ist als bei einem als Suspension vorliegenden Elektrolyten.

Im Beispiel der Figur 1 schreitet die Verarmungsfront 52 im wesentlichen entlang der Längsachse A des Gehäuses 2 fort. Nachdem die Verarmungsfront 52, wie in der Figur 1 dargestellt, das offene Ende 38 des sekundären Bezugselementes 8 erreicht und bereits überschritten hat, stellt sich auch im Inneren des sekundären Bezugselementes 8, d.h. im Sekundärelektrolyten 44 eine Verarmung ein. Als Folge hiervon ergibt sich eine Veränderung des bis anhin konstanten Potentials V₂ der Sekundärelektrode 40. Im weiteren Verlauf würde die Verarmungsfront 52 auch das primäre Bezugselement 6 erreichen und dort eine Veränderung des Potentials V₁ der Primärelektrode 20 hervorrufen.

Bei der Verwendung der Messsonde wird das primäre Bezugselement 6 in an sich bekannter Weise für die bestimmungsgemässe potentiometrische Messung, beispielsweise zur Prozessüberwachung und/oder Prozesssteuerung, eingesetzt. Da aufgrund der längsverschobenen Anordnung der beiden Bezugselemente ab dem Zeitpunkt einer durch die Elektrolytverarmung verursachten Potentialveränderung an der Sekundärelektrode 40 bis zum Eintreten einer unerwünschten Potentialveränderung an der Primärelektrode 20 eine zeitliche Verzögerung besteht, kann das Auftreten einer Veränderung der Potentialdifferenz V₁ - V₂ als Vorankündigung der unerwünschten Potentialveränderung an der Primärelektrode 20 herangezogen werden. Die besagte Zeitverzögerung hängt einerseits vom Längsversatz L der beiden Bezugselemente und andererseits von der Geschwindigkeit ab, mit der die Verarmungsfront 52 fortschreitet, wobei diese Geschwindigkeit sowohl von den Materialeigenschaften der Füllmasse 16 als auch von den Betriebsbedingungen der Messsonde abhängt. Für ein vorgegebenes Einsatzgebiet lässt sich die Zeitverzögerung ohne weiteres anhand von Vorversuchen ermitteln. Falls die Primärelektrode 20 und die Sekundärelektrode 40 im wesentlichen identisch sind, beträgt die Potentialdifferenz V₁ - V₂ anfänglich, d.h. bei noch nicht verarmtem Elektrolyten, im wesentlichen Null.

Zur Überwachung des Alterungszustandes der Messsonde ist es zweckmässig, kontinuierlich oder in zeitlichen Abständen die Potentialdifferenz V₁ - V₂ auf Überschreitung eines vorgegebenen Schwellenwertes zu überwachen. Zusätzlich oder alternativ hierzu kann die Potentialdifferenz V₁ - V₂ auf Überschreitung einer vorgegebenen Veränderungsrate überwacht werden. Bei erfolgter Überschreitung sind umgehend oder nach einer vorgegebenen zusätzlichen Betriebsdauer geeignete Massnahmen zu treffen, beispielsweise ist die Messsonde zu ersetzen oder deren Füllmasse zu regenerieren.

Die Figur 2 zeigt eine Messsonde mit stark verlängertem Verarmungsweg. Die Messsonde weist ein rohrartiges Gehäuse 102 aus elektrisch isolierendem Material, beispielsweise aus Glas oder aus einem Kunststoff wie einem Polyaryletherketon (PAEK), insbesondere Polyetheretherketon (PEEK). Ein Hohlraum 104 des Gehäuses 102 enthält ein primäres Bezugselement 106, ein sekundäres Bezugselement 108 sowie einen Elektrolyten 110, wobei eine Öffnung 112 in einem Endbereich 114 des Sondengehäuses 102 vorgesehen ist. Der Hohlraum 104 ist mit einem ionendurchlässigen hochviskosen mikroporösen Polymer ausgefüllt, welches zusammen mit dem Elektrolyten 110 eine Füllmasse 116 bildet, die vorzugsweise dieselbe Zusammensetzung aufweist wie im Ausführungsbeispiel der Figur 1.

Wie aus der Figur 2 hervorgeht, beinhaltet das patronenförmig ausgebildete primäre Bezugselement 106 ein einseitig offenes Innenrohr 118, welches im wesentlichen parallel zur Längsachse des Gehäuses 102 angeordnet ist, wobei das offene Ende 120 des Innenrohres 118 von der Öffnung 112 des Sondengehäuses 102 abgewandt ist. Das primäre Bezugselement 106 enthält eine Primärelektrode 122 mit bekanntem Potential, wobei diese im gezeigten Beispiel als Ag/AgCI-Elektrode ausgestaltet ist, die einen endständig chlorierten Silberdraht 124 aufweist, der in einen Primärelektrolyten 126 eingetaucht ist. Um ein Ausfliessen des Primärelektrolyten 126 am offenen Ende 120 des Innenrohres 118 zu verhindern, ist dieser in die Poren eines ionendurchlässigen mikroporösen Polymers, vorzugsweise desselben wie es Bestandteil der Füllmasse 116 ist, eingeschlossen. Der chlorierte Endabschnitt 128 des Silberdrahtes 124 ist vorteilhafterweise in der Nähe des verschlossenen Endes 130 des Innenrohres 118 angeordnet. Eine drahtförmige Zuleitung 132, beispielsweise ein Platindraht, führt vom Silberdraht 124 über eine im Kopfteil 134 des Gehäuses 102 angeordnete Dichtung 136, beispielsweise eine Glas- oder Kunststoffdichtung, zu einem externen Steckkontakt 138.

Das sekundäre Bezugselement 108 ist im endnahen Bereich des Innenrohres 118 angeordnet und umfasst eine Sekundärelektrode 140 mit einem endständig chlorierten Silberdraht 142, der in einen nahe beim offenen Ende 120 des Innenrohres 118 befindlichen Teil des Primärelektrolyten 126 getaucht ist, welcher somit auch als Sekundärelektrolyt wirkt. Die Sekundärelektrode 140 ist über eine drahtförmige Zuleitung 144 über die im Kopfteil 134 des Gehäuses 102 angeordnete Dichtung 136 mit einem externen Steckkontakt 146 verbunden.

Aus der Figur 2 ist ersichtlich, dass der Verarmungsweg von der Öffnung 112 zunächst nach oben bis zum offenen Ende 120 des Innenrohres 118 und von dort innerhalb des Innenrohres 118 nach unten bis annähernd an das verschlossene Ende 130 führt. In der Figur 2 ist eine bereits bis ins Innenrohr 118 fortgeschrittene Verarmungsfront 148 dargestellt.

Alternativ zur Ausgestaltung der Figur 2 kann gemäss der Figur 3 die Sekundärelektrode 140a ausserhalb des Innenrohres 118 angeordnet sein, wobei der endständig chlorierte Silberdraht 142a vorzugsweise in einen unmittelbar ausserhalb des offenen Endes 120 befindlichen Teil des Elektrolyten 110 eingetaucht ist.

Anstelle der in den Figuren dargestellten Drahtelektroden können an sich bekannte Leiterbahnelektroden vorgesehen sein, welche entsprechend der Anordnung nach einem der obigen Ausführungsbeispiele auf der inneren oder äusseren Wandfläche eines patronenförmigen Bezugselementes oder auf der inneren Wandfläche des Sondengehäuses aufgebracht sein können.

Neben den oben beschriebenen, als Bezugselektroden für die Messung von lonenkonzentrationen oder Redoxpotentialen ausgebildeten Ausgestaltungen kann die erfindungsgemässe Messsonde auch als Einstabmesskette ausgebildet sein. Zu diesem Zweck ist die Messsonde zusätzlich mit einer Messselektrode, beispielsweise mit einer pH-Elektrode auszustatten. Vorzugsweise ist dann die Messelektrode in an sich bekannter Weise als zentrisches Längsrohr innerhalb einer ringförmig ausgebildeten Bezugselektrode angeordnet, wie beispielsweise der Figur 4 der DE 3405431 C2 entnehmbar ist.

### Bezugszeichenliste

- 2: Gehäuse
- 4: Hohlraum von 2
- 6: primäres Bezugselement
- 8: sekundäres Bezugselement
- 10: Elektrolyt
- 12: Öffnung von 2
- 14: Endbereich von 2
- 16: Füllmasse
- 18: Patrone von 6
- 20: Primärelektrode
- 22: chlorierter Silberdraht von 20
- 24: Primärelektrolyt
- 26: offenes Ende von 18
- 28: Zuleitung für 20
- 30: Steckkontakt für 28
- 32: Kopfteil von 2
- 34: Dichtung von 18
- 36: Patrone von 8
- 38: offenes Ende von 36
- 40: Sekundärelektrode
- 42: chlorierter Silberdraht von 40
- 44: Sekundärelektrolyt
- 46: Zuleitung für 40
- 48: Steckkontakt für 46
- 50: Dichtung von 36
- 52: Verarmungsfront
- 54: verarmter Teil von 16
- 56: nicht verarmter Teil von 16
- 102: Gehäuse
- 104: Hohlraum von 102
- 106: primäres Bezugselement
- 108, 108a: sekundäres Bezugselement
- 110: Elektrolyt
- 112: Öffnung von 102
- 114: Endbereich von 102
- 116: Füllmasse
- 118: Innenrohr
- 120: offenes Ende von 118
- 122: Primärelektrode
- 124: chlorierter Silberdraht von 122
- 126: Primärelektrolyt
- 128: chlorierter Endabschnitt von 124
- 130: verschlossenes Ende von 118
- 132: Zuleitung für 122
- 134: Kopfteil von 102
- 136: Dichtung von 102
- 138: Steckkontakt für 132
- 140, 140a: Sekundärelektrode
- 142, 142a: chlorierter Silberdraht von 140
- 144: Zuleitung für 140
- 146: Steckkontakt für 144
- 148: Verarmungsfront
- A: Längsachse von 2
- L: Längsversatz zwischen 6 und 8
- V₁: Potential der Primärelektrode
- V₂: Potential der Sekundärelektrode

## Patentansprüche

1. Messsonde für potentiometrische Messungen, mit einem Gehäuse (2; 102) aus elektrisch isolierendem Material, wobei das Gehäuse (2; 102) mindestens einen Hohlraum (4; 104) aufweist, welcher ein eine Primärelektrode (20, 122) aufweisendes primäres Bezugselement (6; 106) sowie einen Elektrolyten (10; 110) enthält, wobei das Gehäuse (2; 102) zudem mindestens eine Öffnung (12; 112) aufweist, durch die der Elektrolyt (10; 110) mit einer ausserhalb des Gehäuses (2; 102) befindlichen Messlösung in Kontakt bringbar ist, und wobei der Hohlraum (4; 104) mit einem ionendurchlässigen hochviskosen mikroporösen Polymer ausgefüllt ist, welches zusammen mit dem Elektrolyten (10; 110) eine Füllmasse (16; 116) bildet, **dadurch gekennzeichnet, dass** der Hohlraum (4; 104) ein sekundäres Bezugselement (8; 108) enthält, welches derart angeordnet ist, dass eine von der Öffnung (12; 112) bis zum primären Bezugselement (6; 106) fortschreitende Verarmung (52; 148) an Elektrolyten (10; 110) das sekundäre Bezugselement (8; 108) vor dem primären Bezugselement (6; 106) erreicht, wobei das sekundäre Bezugselement (8; 108) eine Sekundärelektrode (40,140,140a) aufweist, die als Ag/AgCl-Elektrode ausgestattet ist, welche Sekundärelektrode (40, 140, 140a) direkt in den Elektrolyten (10,110) oder in einen Sekundärelektrolyten (44, 126) eingetaucht ist.

2. Messsonde nach Anspruch 1, **dadurch gekennzeichnet, dass** das primäre Bezugselement (6; 106) als primäre Patrone (18; 118) ausgebildet ist, die die Primärelektrode (20; 122) und einen Primärelektrolyten (24; 126) enthält.

3. Messsonde nach Anspruch 2, **dadurch gekennzeichnet, dass** die primäre Patrone (18; 118) mit einer primären Durchtrittsöffnung (36; 120) versehen ist.

4. Messsonde nach Anspruch 2, **dadurch gekennzeichnet, dass** der Primärelektrolyt (24; 126) im Gemisch mit dem gleichen Polymer wie es Bestandteil der Füllmasse (16; 116) ist, vorliegt.

5. Messsonde nach Anspruch 1, **dadurch gekennzeichnet, dass** das sekundäre Bezugselement (8) als sekundäre Patrone (36) ausgebildet ist, die die Sekundärelektrode (40) und den Sekundärelektrolyten (44) enthält.

6. Messsonde nach Anspruch 5, **dadurch gekennzeichnet, dass** die sekundäre Patrone (36) mit einer sekundären Durchtrittsöffnung (38) versehen ist.

7. Messsonde nach Anspruch 5, **dadurch gekennzeichnet, dass** der Sekundärelektrolyt (44) im Gemisch mit dem gleichen Polymer, wie es Bestandteil der Füllmasse (16) ist, vorliegt.

8. Messsonde nach einem der Ansprüche 1 bis 7, **dadurch gekennzeichnet, dass** das primäre Bezugselement (6; 106) und das sekundäre Bezugselement (8, 108, 108a) identisch ausgebildet sind.

9. Messsonde nach einem der Ansprüche 2 bis 4, **dadurch gekennzeichnet, dass** die Sekundärelektrode (140) innerhalb der primären Patrone (118) angeordnet ist und deren eines Ende (128) in den Primärelektrolyten (126), welcher auch als Sekundärelektrolyt wirkt, eingetaucht ist.

10. Messsonde nach einem der Ansprüche 2 bis 4, **dadurch gekennzeichnet, dass** die Sekundärelektrode (140a) ausserhalb der primären Patrone (118) angeordnet ist und deren eines Ende (142a) in den ausserhalb der primären Patrone (118) befindlichen Elektrolyten (110) eingetaucht ist.

11. Messsonde nach Anspruch 1, **dadurch gekennzeichnet, dass** die Primärelektrode des primären Bezugselements und/oder die Sekundärelektrode des sekundären Bezugselements eine als Leiterbahn ausgebildete Elektrode aufweist.

12. Messsonde nach Anspruch 1, **dadurch gekennzeichnet, dass** der Elektrolyt (10; 110) eine Suspension von homogen verteilten Partikeln eines Neutralsalzes mit Ionen gleicher Überführungszahl in einer Lösung des Neutralsalzes ist.

13. Messsonde nach Anspruch 12, **dadurch gekennzeichnet, dass** das Neutralsalz Kaliumchlorid ist.

14. Messsonde nach Anspruch 13, **dadurch gekennzeichnet, dass** der Elektrolyt (10; 110) eine Suspension von feinteiligen Kaliumchloridpartikeln in einer wässrigen oder teilwässrigen Kaliumchloridlösung ist, wobei die Menge des suspendierten Kaliumchlorids mindestens 30, beispielsweise 30 bis 1500, vorzugsweise 100 bis 800, insbesondere 200 bis 400, Prozent, bezogen auf das Trockengewicht des Polymers beträgt.

15. Messsonde nach Anspruch 1, **dadurch gekennzeichnet, dass** sie als Bezugselektrode ausgebildet ist.

16. Messsonde nach Anspruch 1, **dadurch gekennzeichnet, dass** sie als Einstabmesskette ausgebildet ist.

17. Messsonde nach Anspruch 1, **dadurch gekennzeichnet, dass** sie Mittel zur Überwachung einer Potentialdifferenz (V₁ - V₂) zwischen primärem Bezugselement (6; 106) und sekundärem Bezugselement (8; 108; 108a) aufweist.

18. Verfahren zur Überwachung des Alterungszustandes der Messsonde nach Anspruch 1, **dadurch gekennzeichnet, dass** man kontinuierlich oder in zeitlichen Abständen eine zwischen primärem Bezugselement (6; 106) und sekundärem Bezugselement (8; 108; 108a) gemessene Potentialdifferenz (V₁ - V₂) auf Überschreitung eines vorgegebenen Schwellenwertes und/oder auf Überschreitung einer vorgegebenen Veränderungsrate überwacht.

19. Verwendung der Messsonde nach Anspruch 1 zur Prozessüberwachung und/oder Prozesssteuerung.

## Claims

1. Measuring probe for potentiometric measurements, with a housing (2; 102) of an electrically insulating material, wherein the housing (2; 102) comprises at least one hollow space (4; 104) containing a primary reference element (6: 106) with a primary electrode (20, 122) and further containing an electrolyte (10; 110), wherein the housing (2; 102) comprises in addition at least one opening (12; 112) through which the electrolyte (10; 110) can be brought into contact with a measuring solution which is arranged outside of the housing (2; 102), and wherein the hollow space (4; 104) is filled with an ion-permeable, highly viscous, micro-porous polymer substance which in combination with the electrolyte (10; 110) forms a filler mass (16; 116), **characterized in that** the hollow space (4; 104) contains a secondary reference element (8; 108) arranged in such a manner that a deficiency (52; 148) of electrolyte (10; 110) advancing from the opening (12; 112) towards the primary reference element (6; 106) arrives at the secondary reference element (8; 108) before reaching the primary reference element (6; 106), wherein the secondary reference element (8; 108) comprises a secondary electrode (40, 140, 140a) configured as an Ag/AgCl electrode, and wherein said secondary electrode (40, 140, 140a) is immersed directly in the electrolyte (10, 110) or in a secondary electrolyte (44, 126).

2. Measuring probe according to claim 1, **characterized in that** the primary reference element (6; 106) is configured as a primary cartridge (18; 118) containing the primary electrode (20; 122) and a primary electrolyte (24; 126).

3. Measuring probe according to claim 2, **characterized in that** the primary cartridge (18; 118) is provided with a primary passage opening (36; 120).

4. Measuring probe according to claim 2, **characterized in that** the primary electrolyte (24; 126) is present as a mixture with the same polymer substance that is also part of the filler mass (16; 116).

5. Measuring probe according to claim 1, **characterized in that** the secondary reference element (8) is configured as a secondary cartridge (36) containing the secondary electrode (40) and the secondary electrolyte (44).

6. Measuring probe according to claim 5, **characterized in that** the secondary cartridge (36) is provided with a secondary passage opening (38).

7. Measuring probe according to claim 5, **characterized in that** the secondary electrolyte (44) is present as a mixture with the same polymer substance that is also part of the filler mass (16).

8. Measuring probe according to one of the claims 1 to 7, **characterized in that** the primary reference element (6; 106) and the secondary reference element (8, 108, 108a) are configured identically.

9. Measuring probe according to one of the claims 2 to 4, **characterized in that** the secondary electrode (140) is arranged inside the primary cartridge (118) and has one end (128) immersed in the primary electrolyte (126) which also functions as secondary electrolyte.

10. Measuring probe according to one of the claims 2 to 4, **characterized in that** the secondary electrode (140a) is arranged outside of the primary cartridge (118) and has one end (142a) immersed in the electrolyte (110) which is located outside of the primary cartridge (118).

11. Measuring probe according to claim 1, **characterized in that** the primary electrode of the primary reference element and/or the secondary electrode of the secondary reference element comprises an electrode that is configured as a conductive track.

12. Measuring probe according to claim 1, **characterized in that** the electrolyte (10; 110) consists of a suspension of homogeneously distributed particles of a neutral salt with ions of equal transport number in a solution of the neutral salt.

13. Measuring probe according to claim 12, **characterized in that** the neutral salt is potassium chloride.

14. Measuring probe according to claim 13, **characterized in that** the electrolyte (10; 110) is a suspension of small potassium chloride particles in an aqueous or part-aqueous potassium chloride solution, wherein the proportion of the suspended potassium chloride is at least 30 percent, for example 30 to 1500 percent, preferably 100 to 800 percent, and in particular 200 to 400 percent, in relation to the dry weight of the polymer substance.

15. Measuring probe according to claim 1, **characterized in that** said measuring probe is configured as a reference electrode.

16. Measuring probe according to claim 1, **characterized in that** said measuring probe is configured as a single-rod measuring chain.

17. Measuring probe according to claim 1, **characterized in that** said measuring probe comprises means for monitoring a difference (V₁-V₂) between the respective electrical potentials of the primary reference element (6; 106) and the secondary reference element (8; 108; 108a).

18. Method for monitoring the state of aging of the measuring probe according to claim 1, **characterized in that** one continuously or intermittently monitors a difference (V₁-V₂) between the respective electrical potentials of the primary reference element (6; 106) and the secondary reference element (8; 108; 108a) in regard to whether said difference (V₁-V₂) exceeds a previously specified threshold value and/or a previously specified rate of change.

19. Use of the measuring probe according to claim 1 for monitoring and/or controlling a process.

## Revendications

1. Sonde de mesure pour des mesures potentiométriques, comprenant un boîtier (2 ; 102) à base de matériau électro-isolant, le boîtier (2 ; 102) présentant au moins une cavité (4 ; 104), qui contient un élément de référence (6 ; 106) primaire présentant une électrode primaire (20, 122) et un électrolyte (10 ; 110), le boîtier (2 ; 102) présentant de plus au moins une ouverture (12 ; 112), par laquelle l'électrolyte (10 ; 110) peut être mis en contact avec une solution de mesure se trouvant à l'extérieur du boîtier (2 ; 102), et la cavité (4 ; 104) étant remplie avec un polymère microporeux, très visqueux et perméable aux ions, qui forme conjointement avec l'électrolyte (10 ; 110) une masse de remplissage, **caractérisée en ce que** la cavité (4 ; 104) contient un élément de référence (8 ; 108) secondaire, qui est disposé de telle sorte qu'un appauvrissement (52 ; 148 ) en électrolyte (10 ; 110), qui progresse depuis l'ouverture (12 ; 112) jusqu'à l'élément de référence (6 ; 106) primaire, atteint l'élément de référence (8 ; 108) secondaire avant l'élément de référence (6 ; 106) primaire, l'élément de référence (8 ; 108) secondaire présentant une électrode secondaire (40, 140, 140a) qui est conçue comme électrode Ag/AgCl, laquelle électrode secondaire (40 , 140, 140a) est plongée directement dans l'électrolyte (10 ; 110) ou dans un électrolyte secondaire (44, 126).

2. Sonde de mesure selon la revendication 1, **caractérisée en ce que** l'élément de référence (6 ; 106) primaire est conçu comme cartouche (18 ; 118) primaire, qui contient l'électrode primaire (20 ; 122) et un électrolyte primaire (24 ; 126).

3. Sonde de mesure selon la revendication 2, **caractérisée en ce que** la cartouche (18 ; 118) primaire est dotée d'une ouverture de passage (36, 120) primaire.

4. Sonde de mesure selon la revendication 2, **caractérisée en ce que** l'électrolyte primaire (24 ; 126) est présent dans le mélange avec le même polymère que celui qui fait partie de la masse de remplissage (16 ; 116).

5. Sonde de mesure selon la revendication 1, **caractérisée en ce que** l'élément de référence (8) secondaire est conçu comme cartouche (36) secondaire qui contient l'électrode secondaire (40) et l'électrolyte secondaire (44).

6. Sonde de mesure selon la revendication 5, **caractérisée en ce que** la cartouche (36) secondaire est dotée d'une ouverture de passage (38) secondaire.

7. Sonde de mesure selon la revendication 5, **caractérisée en ce que** l'électrolyte secondaire (44) est présent dans le mélange avec le même polymère que celui qui fait partie de la masse de remplissage (16).

8. Sonde de mesure selon l'une quelconque des revendications 1 à 7, **caractérisée en ce que** l'élément de référence (6 ; 106) primaire et l'élément de référence (8, 108, 108a) secondaire sont conçus identiques.

9. Sonde de mesure selon l'une quelconque des revendications 2 à 4, **caractérisée en ce que** l'électrode secondaire (140) est disposée à l'intérieur de la cartouche (118) primaire et dont une extrémité (128) est plongée dans l'électrolyte primaire (126), qui agit également comme électrolyte secondaire.

10. Sonde de mesure selon l'une quelconque des revendications 2 à 4, **caractérisée en ce que** l'électrode secondaire (140a) est disposée à l'extérieur de la cartouche (118) primaire et dont une extrémité (142a) est plongée dans l'électrolyte (110) se trouvant à l'extérieur de la cartouche (118) primaire.

11. Sonde de mesure selon la revendication 1, **caractérisée en ce que** l'électrode primaire de l'élément de référence primaire et/ou l'électrode secondaire de l'élément de référence secondaire présente(nt) une électrode conçue comme piste conductrice.

12. Sonde de mesure selon la revendication 1, **caractérisée en ce que** l'électrolyte (10 ; 110) est une suspension de particules réparties de façon homogène d'un sel neutre avec des ions de même indice de transfert dans une solution de sel neutre.

13. Sonde de mesure selon la revendication 12, **caractérisée en ce que** le sel neutre est du chlorure de potassium.

14. Sonde de mesure selon la revendication 13, **caractérisée en ce que** l'électrolyte (10 ; 110) est une suspension de fines particules de chlorure de potassium dans une solution de chlorure de potassium aqueuse ou semi-aqueuse, la quantité de chlorure de potassium en suspension étant d'au moins 30, par exemple de 30 à 1500, de préférence de 100 à 800, en particulier de 200 à 400 pourcent par rapport à la matière sèche du polymère.

15. Sonde de mesure selon la revendication 1, **caractérisée en ce qu'**elle est conçue comme électrode de référence.

16. Sonde de mesure selon la revendication 1, **caractérisée en ce qu'**elle est conçue comme chaîne de mesure monotige.

17. Sonde de mesure selon la revendication 1, **caractérisée en ce qu'**elle présente des moyens pour le contrôle d'une différence de potentiel (V₁ - V₂) entre l'élément de référence (6 ; 106) primaire et l'élément de référence (8 ; 108 ; 108a) secondaire.

18. Procédé pour le contrôle de l'état de vieillissement de la sonde de mesure selon la revendication 1, **caractérisé en ce qu'**on contrôle de façon continue ou à des intervalles de temps une différence de potentiel (V₁ - V₂) mesurée entre l'élément de référence (6 ; 106) primaire et l'élément de référence (8 ; 108 ; 108a) secondaire au niveau du dépassement d'une valeur seuil prédéfinie et/ou du dépassement d'un taux de variation prédéfini.

19. Utilisation de la sonde de mesure selon la revendication 1 pour le contrôle du processus et/ou pour la commande du processus.
